## Europäisches Patentamt

## European Patent Office

## Office européen des brevets

(11) Publication number: **0 079 409**

**B1**

(12) **EUROPEAN PATENT SPECIFICATION**

(45) Date of publication of patent specification: **28.05.86**

(51) Int. Cl.⁴: **B 65 G 19/24**

(21) Application number: **81305900.3**

(22) Date of filing: **16.12.81**

(54) **Improvements in scraper chain conveyors.**

(30) Priority: **02.11.81 GB 8132975**

(43) Date of publication of application:
**25.05.83 Bulletin 83/21**

(45) Publication of the grant of the patent:
**28.05.86 Bulletin 86/22**

(84) Designated Contracting States:
**AT DE FR GB**

(56) References cited:
**GB-A-1 169 940**
**GB-A-2 077 215**
**US-A-4 105 110**

(73) Proprietor: **PARSONS CONTROLS LIMITED**
**Stourport on Severn**
**Stourport Worcestershire DY13 9AT (GB)**

(72) Inventor: **Millington, Michael John**
**24 Kendlewood Road**
**Kidderminster Worcestershire DY10 2XQ (GB)**

(74) Representative: **Lewis, David Overington**
**c/o Babcock International Ltd. Cleveland House**
**19 St. James's Square**
**London SW1Y 4LN (GB)**

Courier Press, Leamington Spa, England.

## Description

This invention relates to scraper chain conveyors and, more particularly, to scraper chain conveyors used to move particulate material, such as coal, along troughs or pans having inwardly lipped side flanges accommodating the conveyor chains.

In US—A—4 105 110 there is described a scraper chain conveyor in which a flight bar has end portions each having a cutout pocket to receive an associated horizontal chain link with a nose or land extending from a central portion of each cutout packet through the associated horizontal link and a retaining means arranged to co-act with the flight bar to retain the chain link in engagement with the land. Each retaining means is positioned in a slot formed in the flight bar and is secured in position by means of an upright, integral, shank arranged to pass through an aperture in the scraper member. The shank is formed with a screw thread and the aperture in the scraper member is counter-sunk to receive a nut threaded on to the shank to secure the retaining means in position. However, not only is it expensive to form a threaded shank integral with the retaining means or yoke, but the upright aperture in the flight bar accommodating the shank tends to weaken the scraper member. Since dust will tend to accumulate in the counter-sunk portion of the aperture, removal of the nut in order to replace the retaining means or flight bar will first necessitate clearing such dust, which can be difficult unde the operating conditions likely to be encountered, particularly underground.

A similar arrangement is described in GB—A—2 077 215 without the provision of a land transferring loading between the chain and the scraper member so that the further requirement arises that the retaining means is formed not only with an integral, upright, threaded, shank but also with a horizontal bore arranged to register with corresponding bores in the scraper member to accommodate a horizontally extending bolt to ensure positive locking of the retaining means on the scraper member. This again is an expensive arrangement tending to weaken the scraper member and requires the removal of two nuts to effect replacement.

According to the present invention, there is provided a scraper member for a scraper chain conveyor in which a flight bar has end portions each having a cutout pocket to receive an associated horizontal chain link with a nose or land extending from a central portion of each cutout pocket through the associated horizontal link and a retaining means arranged to co-act with the flight bar to retain the chain link in engagement with the land (US—A—4 105 110), characterised in that the flight bar is formed adjacent each retaining means with an upright web portion which forms a flat face (32) and which is of substantially reduced thickness in relation to the remainder of the flight bar forming a flat face in the direction of motion of the conveyor and in that the retaining means is formed as a symmetrical and reversible finger piece and upright lug, each upright lug having faces adapted to mate with the respective flat face, a bolt extending in the direction of scraping motion through the upright lug of the retaining means and the upright web portion securing the retaining means to the flight bar.

By utilising the finger piece merely as means for retaining the horizontal chain link on the land projecting from the attachment means, no loading is required to be transmitted through the finger piece. The provision of a horizontally extending bolt avoids weakening of the flight bar and facilitates access when replacement of the flight bar is necessary.

The invention will now be described, by way of example, with reference to the accompanying drawings, in which:—

Figure 1 is a front elevation and Figure 1B is a rear elevation of a flight bar;

Figures 2, 3 and 4 are cross-sections of the flight bar taken on the lines II—II, III—III and IV—IV respectively;

Figure 5 is an elevation of a finger piece for attachment to the flight bar;

Figures 6 and 7 are respectively an end elevation and a plan view of the finger piece;

Figure 8 is a cross-sectional elevation of a portion of a conveyor pan together with portions of flight bars assembled on to an endless conveyor chain;

Figure 9 is an elevation of a saddle piece for attachment to the endless conveyor chain; and

Figure 10 is cross-section of the saddle piece taken on the lines X—X of Figure 9.

As indicated in Figure 8, a scraper chain conveyor includes a pair of endless chains 2, one only of which is shown, passing over end sprocket wheels (not shown) and running in upper and lower races 4, 6 formed by inwardly directed flanges 8, 10 on pans 12 extending the length of the conveyor.

Flight bars 14 are positioned at intervals along the pairs of chains to extend perpendicularly between the chains with the bars in the upper race 4 of the conveyor being carried along in contact with the web plates 16 of the pans 12 to draw coal along the upper race.

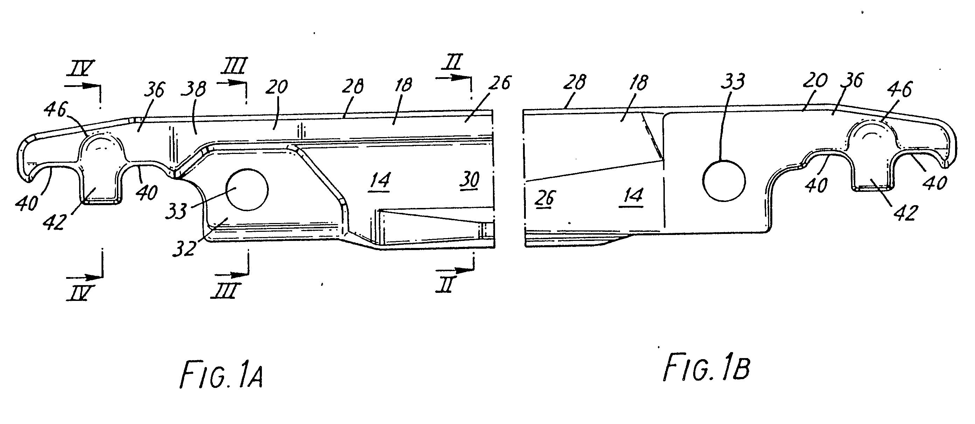

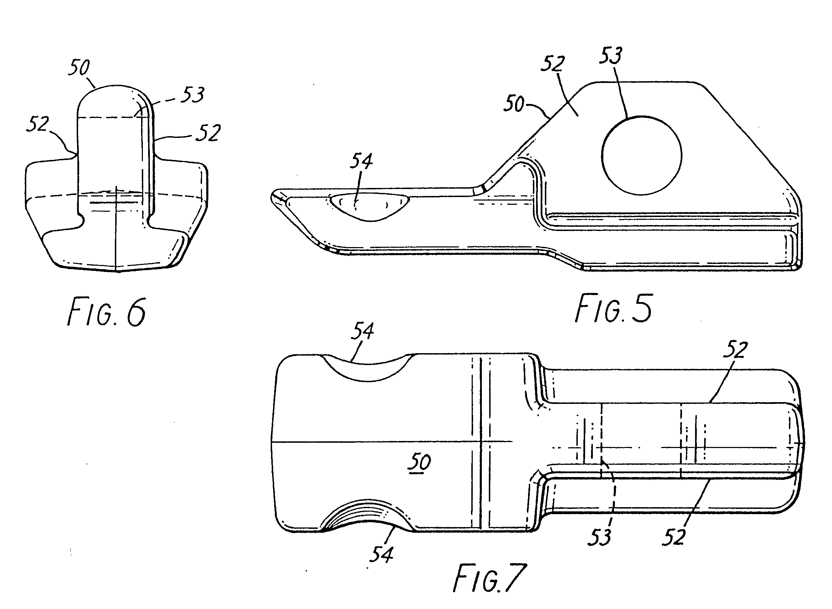

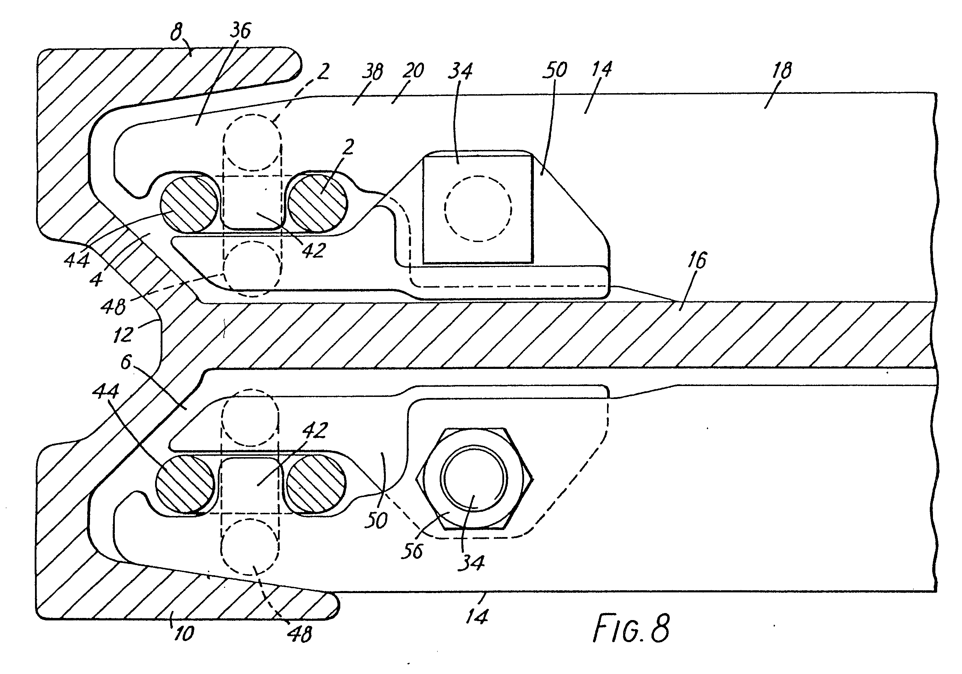

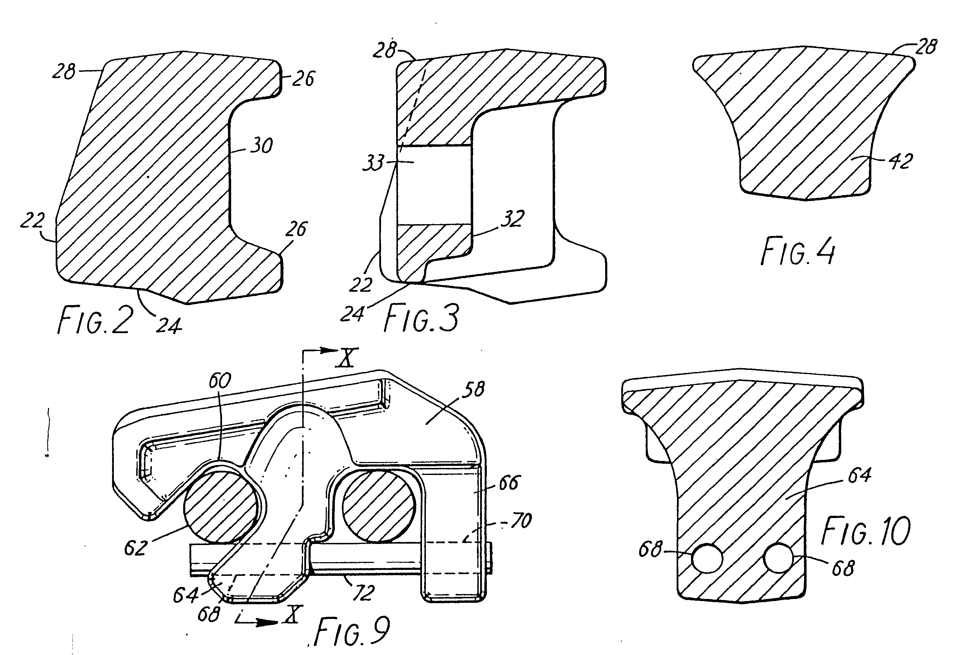

As shown in Figures 1A, 1B, 2, 3 and 4, each flight bar 14 includes a central portion 18 and end portions 20. The central portion 18 is of a generally square cross-section tapered back from a lower part of the trailing edge 22. The base 24 of the bar has a 20° taper from the lower part of the trailing edge to the mid-plane and then a 10° taper up to the leading edge 26. The top 28 of the bar has a 65° taper from the lower part of the trailing edge to well aft of the mid-plane and then a 10° taper up to the leading edge. The leading edge is formed with a recess 30 intermediate to the top 28 and the base 24 of the bar.

Each end portion 30 extends smoothly from the central portion but is partially cut-away at the front adjacent the central portion to form a flat face 32 which is drilled with a bore 33 to receive a square headed retaining bolt 34 (Fig. 8). Extensions 36 of the upper portions 38 of the end portion 20 are formed with lower faces 40 conforming to the chain links, a land 42 extending downwardly seating in a first link 44 (Fig. 8) of chain extending parallel to the web plate 16 and edge recesses 46 accommodating the adjoining chain links 48 (Fig. 8) perpendicularly disposed to the first link 44.

As shown in Figures 5, 6 and 7 a finger piece 50 is formed to complement the extension 36 of the end portion 20 and is provided with flat faces 52 one or other of which mates with the flat face 32 in the end portion and is also drilled with a bore 53 to permit passage of the square headed retaining bolt 34. Edge recesses 54 are formed in the finger pieces to accommodate the chain links 48 adjoining the first link 44.

To assemble a flight bar 14 onto the pair of conveyor chains 2, the finger pieces 50 are slid on the web plate 16 below corresponding horizontal chain links in the upper run and the flight bar 14 lowered to engage the finger pieces 50 and seat upon the chain. Square headed retaining bolts 34 are then inserted to extend through the finger pieces and the end portion 20 with the square heads butting against shoulders on the finger plates and nuts 56 respectively tightened thereupon to secure the finger pieces to the flight bar.

It will be appreciated that the finger pieces 50 merely serve to retain the flight bar in contact with the chain and do not transmit the drive force, which is taken either on the land 42 or on the rear face of the extension 36.

Taken together, the end portions 20 and the finger pieces 50 approximate in cross-section to the cross-section of the central portion of the bar, thereby tending to preclude accumulation of coal particles adjacent the flanges of the pans. Furthermore, the finger pieces are symmetrical and thus reversible, thereby being attachable to either end portion of the flight bar.

As shown in Figures 9 and 10 additional saddle pieces 58, approximating in shape to the extensions 36 of the end portion 20 of the flight bars 14 are secured to the conveyor chains at intervals intermediate the flight bars. Each additional saddle piece 58 is formed as a saddle 60 conforming to a horizontally disposed link 62 of chain with with a central land 64 extending downwardly through the link of chain. An outer, downwardly extending side flange 66 also conforms to the link of chain. Two, aligned, pairs of holes 68, 70 are drilled through the land and the side flange to receive pins 72 extending tangentially of the underside of the link of chain and serving to retain the additional saddle piece on the link of chain.

In operation, the additional saddle pieces 58 are positioned on the conveyor chains and serve to lift the chain clear of the web plate 16. In motion, the additional saddle pieces serve to sweep coal particles out of the flanged portions of the pans and thereby reduce the possibility of accumulation of coal particles in that region. As with the flight bars, the drive force is taken either on the land 64 or on the rear face of the saddle 60 and the pins 72 merely serve to retain the additional saddle piece on the link of chain.

## Claims

1. A scraper chain conveyor in which a flight bar (14) has end portions each having a cutout pocket (40) to receive an associated horizontal chain link (44) with a nose or land (42) extending from a central portion of each cutout pocket through the associated horizontal link and a retaining means (50) arranged to co-act with the flight bar to retain the chain link in engagement with the land, characterised in that the flight bar (14) is formed adjacent each retaining means with an upright web portion which forms a flat face (32) and which is of substantially reduced thickness in relation to the remainder of the flight bar in the direction of motion of the conveyor and in that the retaining means (50) is formed as a symmetrical and reversible finger piece and upright lug, each upright lug having faces (52) adapted to mate with the respective flat face (32), a bolt (34) extending in the direction of scraping motion through the upright lug of the retaining means (50) and the upright web portion securing and retaining means (50) to the flight bar (14).

2. A scraper member as claimed in Claim 1, characterised in that the bolt (34) is formed with a head arranged to co-act with a shoulder formed on the retaining means (50) to restrain rotation of the bolt.

## Patentansprüche

1. Kratzkettenförderer, bei dem ein Mitnehmerstab (14) Endabschnitte hat, die jeweils eine ausgeschnittene Tasche (40) zur Aufnahme eines zugeordneten, horizontalen Kettengliedes (44) haben, wobei sich eine Nase oder ein Steg (42) vom Mittelteil jeder ausgeschnittenen Tasche durch das zugeordnete, horizontale Glied erstreckt und eine Halteanordnung (50) zur Zusammenwirkung mit dem Mitnehmerstab angeordnet ist, um das Kettenglied mit dem Steg in Eingriff zu halten, dadurch gekennzeichnet, daß der Mitnehmerstab (14) nahe jeder Halteanordnung mit einem aufrecht stehenden Versteifungsabschnitt versehen ist, der eine ebene Fläche (32) hat und mit Bezug zum verbleibenden Teil des Mitnehmerstabes in Bewegungsrichtung des Förderers eine im wesentlichen verringerte Dicke hat, und daß die Halteanordnung (50) als symmetrischer und umkehrbarer Fingerteil und aufrechtstehender Ansatz ausgebildet ist, wobie jeder aufrechtstehende Ansatz Flächen (52) hat, die mit der jeweiligen ebenen Fläche (32) zusammenpassen können, und wobei sich ein Bolzen (34) in Richtung der Kratzbewegung durch den aufrechtstehenden Ansatz der Halteanordnung (50) und den aufrechtstehenden Versteifungsabschnitt erstreckt, um die Halteanordnung (50) am Mitnehmerstab (14) zu sichern.

2. Kratzglied nach Anspruch 1, dadurch gekennzeichnet, daß der Bolzen (34) mit einem Kopf versehen ist, der mit einer Schulter an der Halteanordnung (50) zusammenwirkt, um die Drehung des Bolzens zu hemmen.

**Revendications**

1. Transporteur à raclettes dans lequel une raclette (14) comporte des tronçons extrêmes présentant chacun une poche échancrée (40) pour recevoir un maillon de chaîne horizontal (44), un nez ou ressaut (42) saillant sur une partie médiane de chaque poche échancrée à travers le maillon horizontal associé et un moyen de retenue (50) étant agencé pour coopérer avec la raclette pour retenir le maillon de chaîne engagé sur le ressaut, caractérisé en ce que la raclette (14) présente près de chaque moyen de retenue une palmure verticale qui forme une face plate (32) et qui est d'épaisseur sensiblement réduite par rapport au reste de la raclette dans le sens de mouvement du transporteur et en ce que le moyen de retenue (50) se présente sous la forme d'une pièce de préhension symétrique et réversible et d'une oreille verticale, chaque oreille verticale présentant des faces (52) propres à s'apparier avec la face plate respective (32), un boulon (34) traversant dans la direction de mouvement de raclage l'oreille verticale du moyen de retenue (50) et la palmure verticale, fixant le moyen de retenue (50) à la raclette (14).

2. Raclette selon la revendication 1, caractérisée en ce que le boulon (34) présente une tête agencée pour coopérer avec un épaulement formé sur le moyen de retenue (50) pour empêcher le boulon de tourner.

FIG. 1A

FIG. 1B

0 079 409

FIG. 6

FIG. 5

FIG. 7

FIG. 8

0 079 409

FIG.2

FIG.3

FIG.4

FIG.9

FIG.10

0 079 409